Europäisches Patentamt

**European Patent Office**

Office européen des brevets

(19)

(11) Veröffentlichungsnummer: **0 177 896**
**A2**

(12) **EUROPÄISCHE PATENTANMELDUNG**

(21) Anmeldenummer: **85112513.8**

(22) Anmeldetag: **03.10.85**

(51) Int. Cl.⁴: **B 01 D 53/34**

(30) Priorität: **12.10.84 DE 3437400**
**18.10.84 DE 3438267**

(43) Veröffentlichungstag der Anmeldung: **16.04.86**
**Patentblatt 86/16**

(84) Benannte Vertragsstaaten: **AT BE CH DE FR GB IT LI LU NL SE**

(71) Anmelder: **MikroPul Ducon Gesellschaft für Mahl- und Staubtechnik mbH, Welserstrasse 9-11, D-5000 Köln (DE)**

(72) Erfinder: **Barlage, Clemens, Kaiserhof 51, D-4572 Essen/Addrup (DE)**

(74) Vertreter: **Bergen, Klaus, Dipl.-Ing. et al, Patentanwälte Dr.-Ing. Reimar König Dipl.-Ing. Klaus Bergen Wilhelm-Tell-Strasse 14 Postfach 260162, D-4000 Düsseldorf 1 (DE)**

(54) **Verfahren und Vorrichtung zum Neutralisieren und Abscheiden von Schadstoffen in Rauch- bzw. Abgasen.**

(57) Bei einem Verfahren zum Neutralisieren und Abscheiden saurer bzw. säurehaltiger, insbesondere Schwefel enthaltender Schadstoffe in bzw. aus Rauch-/Abgasen von Feuerungsanlagen, wobei den Gasen in einem Rauchgas-Reaktor bzw. Rauchgas-Kanal (6, 18) Frischkalk und/oder Altkalk zugeführt wird, werden agglomerierte Kalkpartikel vor dem Eindüsen in den Rauchgas-Reaktor feinstzerkleinert. Das Feinstzerkleinern läßt sich mit einem dem Rauchgas-Reaktor (6, 18) zugeordneten, in einem Zulauf (14) für den Altkalk angeordneten Zerhacker oder einer Mühle (16, 20) erreichen.

Dr.-Ing. Reimar König     Dipl.-Ing. Klaus Bergen

Wilhelm-Tell-Str. 14    4000 Düsseldorf 1    Telefon 39 70 26    Patentanwälte

0177896

- 1 -                    36 276 B

MikroPul Ducon Gesellschaft für Mahl- und Staubtechnik mbH
==========================================================

Welserstraße 9-11, 5000 Köln 90
===============================

"Verfahren und Vorrichtung zum Neutralisieren und
Abscheiden von Schadstoffen in Rauch- bzw. Abgasen"

Die Erfindung betrifft ein Verfahren zum Neutralisieren und Abscheiden saurer bzw. säurehaltiger, insbesondere Schwefel enthaltender Schadstoffe in bzw. aus Rauch-/Abgasen von Feuerungsanlagen, wobei den Gasen in einem Rauchgas-Reaktor bzw. Rauchgas-Kanal Frischkalk und/oder Altkalk zugeführt wird, sowie eine Vorrichtung zum Durchführen dieses Verfahrens.

Um saure bzw. säurehaltige Schadstoffe, insbesondere Schwefeldioxyde in Rauchgasen von Feuerungsanlagen zu neutralisieren, sind sowohl Naß- als auch Trocken-Gasreinigungsverfahren bekannt. Aus der GB-PS 1 380 869 ist bei einem Naß- verfahren das Binden von Schwefeldioxyd und Sulfiden aus Verbrennungsabgasen einer Glasschmelze bekannt. Als Neutralisationsmittel wird Natronlauge oder Natriumkarbonat in eine Kontaktstrecke des Abgasstroms eingesprüht. Zusätzliche Prallkörper der Kontaktstrecke sorgen während des Absorptionsvorganges für ein Brechen der Partikel, wobei sich frische Oberflächen bilden, die mit dem restlichen Schadstoff reagieren. Das sich bei diesem Neutralisationsprozeß bildende Natriumsulfat wird innerhalb der Glasherstellung wieder verwendet. Da die Rauchgase mit relativ hoher Temperatur vorliegen, wird zum Abkühlen eine Naßwäsche benutzt, der dann das Neutralisationsmittel beigegeben wird.

- 2 -

Als nachteilig hat sich bei den bekannten Naß-Verfahren zum Abscheiden des Schwefeldioxydes der dabei als Endprodukt in großen Mengen anfallende Gips herausgestellt, da die Aufnahmekapazität des Absatzmarktes für handelsüblichen Gips äußerst begrenzt ist.

Mit den bekannten Trocken-Reinigungsmethoden lassen sich beim Behandeln der Abgase derartig große Gips-Mengen vermeiden. Bei einem bekannten Trocken-Reinigungs-Verfahren werden Neutralisationsmittel, z. B. wässrige Kalksuspensionen, mittels pumpenbetriebener Flüssigkeitszerstäuber kontinuierlich in die Rauchgase eingesprüht. Hierdurch werden die Schadstoffe unter gleichzeitiger Auftrocknung der mit der Suspension eingebrachten Trägerflüssigkeit in Neutralsalze überführt, die dann zusammen mit dem Flugstaub in einem Staubabscheider aus dem Rauchgas entfernt werden.

Es ist weiterhin ein Trockenverfahren bekannt, bei dem gekühlte und konditionierte, d. h. eine höhere Bereitschaft der Schadstoffe zur Reaktion besitzende Abgase in einen Venturi-Reaktor gelangen und dort beschleunigt werden. In dem als Diffusor ausgebildeten Teil werden dem Abgas im Venturi-Reaktor Frischkalk und das von einem nachfolgenden Gewebefilter abgeschiedene Staub-Altkalkgemisch erneut zugeführt. Dabei lassen sich schon nach relativ kurzen Betriebszeiten Störungen am Reaktor nicht vermeiden, deren Ursache in der zum Vermindern und damit Reduzieren der laufenden Betriebskosten einer Entschwefelungsanlage sinnvollen Rezirkulation bzw. Wiederverwendung des vom Gewebefilter abgeschiedenen Altkalkes bis zum völligen Sättigungsgrad zu finden ist.

Der Erfindung liegt die Aufgabe zugrunde, die Verwendung von Kalk als Adsorbens beim Neutralisieren von Schadstoffen, insbesondere Schwefeldioxyd aus Rauchgasen problemlos zu gestalten, insbesondere auch beim wiederholten Einsatz

- 3 -

wiedergewonnener und erneut in den Prozess eingeführter Altkalkpartikel, sowie auch den Anlagenaufwand möglichst gering zu halten.

Erfindungsgemäß wird diese Aufgabe verfahrensmäßig dadurch gelöst, daß agglomerierte Kalkpartikel vor dem Eindüsen in den Rauchgas-Reaktor feinstzerkleinert werden. Hierbei wird von der Erkenntnis ausgegangen, daß einerseits der Neukalk im Vorratssilo zum Verklumpen neigt und damit für ein gutes Binden der Schadstoffe zu große Kalkpartikel vorliegen. Andererseits sind besonders dann, wenn Alt- und Neukalk verwendet werden, die bisher nach dem Filtern erneut in den Reinigungsprozess zurückgeführten kugeligen Altkalkpartikel von einer dünnen Schwefelschicht umhüllt, die nicht nur das geforderte ausreichende Binden der Schadstoffe verhindert, sondern gleichzeitig und zusammen mit dem Kalkkern die Partikelgröße so weit erhöht, daß es sehr schnell zu unerwünscht großen Ablagerungen kommt, die das angestrebte Neutralisieren der Schadstoffe bzw. den Betrieb der Anlage unmöglich machen. Diese negativen Auswirkungen lassen sich überraschend einfach insbesondere dann ausschließen, wenn erfindungsgemäß vorgegangen wird, d. h., sowohl die dünne $SO_2$-Mantelschicht als auch der Kalkkern des Altkalks selbst sowie auch klumpige Neukalk-Partikel, die zu diesem Zeitpunkt noch keine Schadstoffe gebunden haben, zerschlagen werden. Mit im Verhältnis 8:1 bis 12:1 verwendetem Altkalk, d. h. mit nur geringen Mengen Frischkalk, läßt sich das Schwefeldioxyd fast völlig entfernen; ein optimales Verhältnis liegt vor, wenn zehn Anteile Altkalk mit einem Anteil Frischkalk gemischt werden.

Ein sehr guter Wirkungsgrad läßt sich vorzugsweise dann erreichen, wenn die sich beim Zusammenführen mit den Rauchgasen in einer ersten Stufe vermischenden und agglomerierenden Altkalk- und Frischkalkpartikel vor dem Eindüsen in einen zweiten Reaktor feinstzerkleinert werden. Hierzu läßt sich dem Rauchgas-Reaktor ein zweiter Reaktor nachschalten, wobei allerdings auch hier zuvor das in der ersten Reaktor-

- 4 -

stufe aus dem Kalk-Adsorbens des Alt- und Frischkalkes mit den Schadstoffen gebildete Agglomerat feinstzerkleinert und dann in den zweiten Reaktor eingegeben wird.

Es empfiehlt sich und fördert das Vereinfachen des Neutralisationsprozesses, wenn die Kalkpartikel beim Feinstzerkleinern mit Wasser vermischt werden; ein sehr guter Befeuchtigungsgrad des Kalks läßt sich dann erreichen, wenn die Menge des zugegebenen Wassers etwa 10 bis 15% der Gesamtmenge des umlaufenden Kalks, d.h. Frisch und/oder Altkalk, beträgt. Bei dem bevorzugten Mischungsverhältnis von zehn Anteilen Altkalk und einem Anteil Frischkalk sind bei einer umlaufenden Kalkmenge von 200 kg Alt- und 20 kg Neukalk ca. 22 bis 33 l Wasser erforderlich.Es hat sich nämlich gezeigt, daß Rauchgase mit einer Temperatur bis ca. 160$^{\circ}$C allein durch Zuführen der benötigten Wassermenge unmittelbar in die Mühle selbst bis auf die Filtereintrittstemperatur von ca. 100$^{\circ}$C gekühlt werden können. Das Wasser verleiht dem in der Mühle aufbereiteten, d.h. feinstzerkleinerten Frisch- und Altkalk genügend Feuchtigkeit, um beim Einsprühen des Frisch/Altkalk-Gemisches in den Rauchgas-Reaktor nicht nur die Temperatur der durch den Reaktor strömenden Rauchgase zu senken, sondern ebenfalls die erforderliche Bindefähigkeit des Kalks für Schadstoffe aufrechtzuerhalten, da der Kalk beim Reduzieren der Temperatur nicht völlig ausgetrocknet und eine ausreichende Feuchtigkeit bewahrt. Somit kann bis zu dem obigen Temperaturbereich ohne einen den Anlagenaufwand erhöhenden vorgeschalteten Gaskühler ausgekommen werden.

Das Zerschlagen bzw. -trümmern der kugeligen Altkalk- bzw. miteinander vermengten Altkalk- und Frischkalkpartikel kann mit einem in einem Zulauf des Altkalks angeordneten Zer-

- 5 -

hacker oder eine Mühle und einen an eine die beiden Reaktoren miteinander verbindende Rohrleitung angeschlossenen zweiten Zerhacker oder eine Mühle erreicht werden. Die dem ersten Reaktor zugeordnete Mühle kann dabei bevorzugt einem als Schneckenförderer ausgeführten Zulauf für den Altkalk vorgeschaltet sein. Eine Mühle läßt sich mit mehreren Schlegelmessern bestücken, die auf einer Welle im Inneren eines Gehäuses der Mühle angeordnet sind. Während des Rotierens der Welle werden die ansonsten lose nach unten hängenden Messer aufgerichtet, zerkleinern den zugeführten Kalk und drücken den Feinkalk anschließend in den angeschlossenen Reaktor. Ein Feinstzerkleinern von Altkalk- und Frischkalkpartikeln läßt sich vor dem Einbringen in den ersten Reaktor erreichen, indem eine Neukalk-Leitung in ein an den Zulauf für den Altkalk angeschlossenes Saugrohr der Mühle mündet.

Die Mühle kann vorzugsweise unmittelbar am Reaktor angeordnet sein und mit ihrer Austrittsseite im Reaktorinneren münden. Die Mühle schleudert die feinstzerkleinerten Bestandteile somit direkt in das Reaktorinnere, wobei die Mühle so am Reaktor angeordnet sein sollte, daß das Adsorbens in einem Winkel von ca. 90$^{o}$C zum Reaktorquerschnitt eingeschleudert wird. Damit kann die Mühle neben ihrer Aufgabe des Feinstzerkleinerns des Adsorbens auch noch für dessen gleichmäßige Verteilung im Reaktor, d.h. für ein gutes Vermischen mit dem Rauchgasstrom sorgen. Für eine wirkungsvolle Sorption ist eine homogene Mischung von Gas mit Adsorbens nämlich nicht weniger bedeutend wie ein ausreichendes Zerkleinern, d.h. Schaffen eines ausreichenden Anteils an reaktiver Oberfläche.

Eine Wasserleitung kann eingangsseitig neben einem Zuführrohr für den Alt- und/oder Neukalk mittig in den Zerkleine-

- 6 -

rer eintreten. Des weiteren kann knapp unterhalb der Wasserleitung eine Scheibe angeordnet sein. Das Wasser läßt sich somit im Zentrum des Zerkleinerers zuführen, d.h. auf die darin rotierende, mit Messern bestückte Welle eines als Mühle oder Zerhacker ausgebildeten Zerkleinerers, so daß sich ein besonders effektives Vermischen mit dem Kalk erreichen läßt. Hierzu kann auch die ca. 3 cm unterhalb des Austrittsendes der beispielsweise aus Kupfer bestehenden Wasserleitung angeordnete Scheibe beitragen, die den auftreffenden Wasserstrahl zerstäubt und verteilt.

Bei einem an die Wasserleitung angeschlossenen Regler läßt sich das Wasser periodisch, beispielsweise rechnergesteuert zuführen. Es hat sich herausgestellt, daß die benötigte Wassermenge etwa alle 15 Minuten zugeführt werden muß. Das Binden der Schadstoffe läßt sich solange effektiv erreichen, wie die Feuchtigkeit des Umlaufkalks noch 60 bis 65% der Ausgangsfeuchtigkeit beträgt. Hierbei ist davon auszugehen, daß der Feuchtigkeitsgrad nach ca. zehn Minuten abfällt und nach weiteren fünf Minuten, d.h. insgesamt fünfzehn Minuten, den Grenzwert erreicht, der auf einen Rechner angezeigt werden kann.

Als Reaktoren eingesetzte Venturi-Kammern mit einem Diffusorabschnitt, d.h. nach oben divergierendem Rauchgaskanal, verursachen einen negativen Druck (Unterdruck) im Bereich der Alt- und Frischkalkzuführung, der durch die dadurch hervorgerufene Injektorwirkung das Zuteilen der Kalkanteile unterstützt. Das Gas strömt im Reaktor von unten nach oben und erzeugt im Diffusorabschnitt ein Wirbelbett mit einer negativen Beschleunigung, bei der eine Agglomeration des Adsorbens mit den Schadstoffen im heißen Trägergas stattfindet. Dieser Vorgang und damit eine beschleunigte Reaktion

- 7 -

wird bei einem von unten nach oben durchströmten Reaktor zusätzlich noch durch die Brownsche Molekularbewegung unterstützt. Die Verweilzeit des Rauchgases und des Adsorbens im Reaktor ist aufgrund der einwirkenden Schwerkraft auf die Staubpartikel nicht gleich. Im vorliegenden Fall ergibt sich eine ausreichend lange Verweilzeit im Reaktor, da die Partikelgeschwindigkeit von der Gasgeschwindigkeit subtrahiert werden kann, während sich demgegenüber beispielsweise bei einem Fallstrom-Reaktor die Gas- und Partikelgeschwindigkeiten addieren; die Verweilzeit im Reaktor verkürzt sich damit erheblich.

Die Temperatur des Rauch- bzw. Abgases läßt sich in einem den Reaktoren vorgeschalteten Gaskühler reduzieren. Dazu wird Wasser mittels Preßluft in den Gaskühler eingesprüht. Bei Wasser-/Luftdüsen, die im Gaskühler entgegen der Strömungsrichtung des Gases angeordnet sind, erhöht sich die Verweilzeit des zerstäubten Wassers im Gaskühler. Das ermöglicht ein weitestgehendes Trocknen des Wassers auf seinem Weg zum Boden des Kühlers und sorgt für eine konstante Feuchtigkeit. Flüssigkeit, die dennoch bis zum Boden des Gaskühlers gelangt, kann sich bei einem schrägverlaufenden Boden des Gaskühlers gezielt im tiefsten Punkt sammeln und abgezogen werden.

Durch die Verwendung von Kalk als Adsorbens enthält das nach dem Reinigungsvorgang anfallende Endprodukt noch so viele Gipsanteile, daß sich das Abfallprodukt als Preßmaterial zum Herstellen von Kalksandsteinen bzw. als Material zum Verputzen verwenden läßt. Dem Abfallprodukt muß hierzu je nach Verwendungsfall lediglich in gewissen Anteilen Zement und Sand beigemischt werden.

Die Erfindung wird nachfolgend anhand der in der Zeichnung schematisch als Fließschema dargestellten Ausführungsbei-

- 8 -

spiele näher erläutert. In der Zeichnung zeigen:

Fig. 1 ein Fließschema einer ersten Ausführung einer Anlage zum Neutralisieren und Abscheiden von Schwefel enthaltenden Schadstoffen; und

Fig. 2 ein Fließschema einer zweiten Ausführung einer Anlage zum Neutralisieren und Abscheiden von Schwefel enthaltenden Schadstoffen.

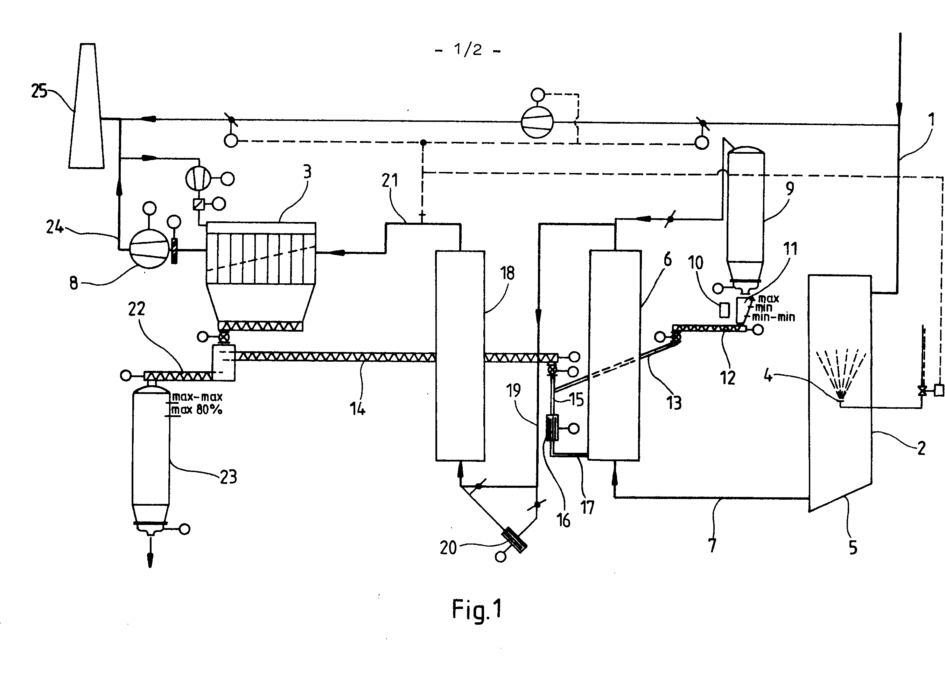

Die von einer nicht dargestellten Feuerungsanlage kommenden heißen Rauch- bzw. Abgase treten gemäß Fig. 1 über eine Rohrleitung 1 tangential in den oberen Bereich eines Verdampfungs-Kühlers 2 ein, in welchem sie auf die zulässige Filtereintrittstemperatur des nachgeschalteten Filters 3 gekühlt werden. Aufgrund des tangentialen Einleitens der Gase werden diese im Kühler 2 in Rotation versetzt, was das Vermischen mit dem Kühlmedium unterstützt und eventuelle Kondensattropfen beseitigt. Zum Kühlen wird Wasser mittels Wasser/Luft-Düsen 4, von denen beispielsweise vier nach oben, d.h. entgegen dem Gasstrom gerichtete, in einem an eine Wasser- und Luftleitung angeschlossenen Ringkanal etwa in der Mitte des Kühlers 2 angeordnet sein können, mit einem feinen Tropfenspektrum nach oben in den Kühler 2 eingesprüht, so daß sich ein völliges Verdampfen des Kühlwassers auf seinem verlängerten Weg von zunächst aufwärts und anschließend oben nach unten, d. h. in gleicher Richtung wie der Gasstrom, erreichen läßt.

Im Kühler werden die notwendige Konditionierung, d.h. Bereitschaft der Schadstoffe zur Reaktion beschleunigt und etwa im Abgasstrom noch vorhandene Funken gelöscht. Das feine Tropfenspektrum und ein temperaturabhängiges Einschal-

- 9 -

ten der Düsen 4 gewährleistet weitestgehend einen trockenen Kühlerboden, so daß sich Anbackungen und Schlammanhäufungen vermeiden lassen. Bei einem schräggestellten Boden 5 des Kühlers 2 läßt sich bis zum Boden gelangende Flüssigkeit gezielt im tiefsten Punkt sammeln, der unterhalb einer von dem Kühler 2 zu einem nachgeschalteten Rauchgas-Reaktor 6 verlaufenden Leitung 7 liegen sollte. Es entsteht dann nämlich beim Ansaugen der Rauch- bzw. Abgase, die ein dem Filter 3 nachgeordneter Ventilator 8 vom Ofen in Pfeilrichtung durch das gesamte System saugt, eine die angesammelte Flüssigkeit mitreißende Sogwirkung.

Die gekühlten und konditionierten Abgase werden von der Leitung 7 am unteren Ende des Kühlers 2 in einen ersten Rauchgas-Reaktor 6 geleitet; die vom Ventilator 8 bewirkte Geschwindigkeit des Gases beträgt im Reaktor 6 ca. 35 m/s. Aufgrund dieser hohen Geschwindigkeit wird auf den im unteren Teil des Reaktors 6 zugeführten Frisch- und Altkalk eine beim Zuteilen des Kalks unterstützende Injektorwirkung ausgeübt. Der Frischkalk wird von einem Kalksilo 9 abgezogen und über eine geeignete Dosiereinrichtung, wie eine Waage 10 oder einen Meßtrichter 11, einem motorgetriebenen Schneckenförderer 12 zugeführt und von diesem in einer Leitung 13 zu einem an einen Schneckenförderer 14 für Altkalk angeschlossenen Saugrohr 15 eines dem Reaktor 6 möglichst nahe der Gaseinströmseite zugeordneten Zerhackers oder einer Mühle 16 transportiert. Von der Ausgabe- bzw. Druckseite der Mühle 16 mündet eine waagerechte Rohrzuführung 17 in den Reaktor, über die der zuvor in der Mühle 16 feinstzerkleinerte Alt- und/oder Neukalk zugeführt wird.

Die im Reaktor 6 agglomerierten Partikel, d.h. insbesondere der Altkalk-Anteil, lassen sich bis zur völligen Sättigung wiederverwenden, wozu die kugeligen Altkalk-Partikel nach dem Abscheiden des Staub-Adsorbens-Gemisches im nachgeordneten Filter 3 erneut dem Prozess zugeführt werden. Der motorgetriebene Schneckenförderer 14 erstreckt sich dazu unterhalb des beispielsweise aus einzelnen Filter-Modulen, die sich zu Filter-Einheiten für große Gasmengen beliebig aneinanderreihen lassen, als Schlauchtaschenfilter zusammengesetzten Filters 3 bis vor den Reaktor 6. Die Altkalk-Partikel und die gegebenenfalls zusammengebackenen Neukalk-Anteile werden jedoch, bevor sie erneut in den Prozess gegeben werden, in dem bzw. der unterhalb des Schneckenförderers 14 angeordneten Zerhacker bzw. Mühle 16 zerschlagen und dann von dem rotierenden Zerhacker 16 über das Rohr 17 in den Reaktor 6 gedrückt und dabei von dem einströmenden Gas mitgerissen.

Zum Optimieren der Abscheideleistung befindet sich hinter dem ersten Reaktor 6 ein zweiter Reaktor 18. Eine Rohrleitung 19 verbindet die Ausgangsseite des ersten Reaktors 6 mit der Eingangsseite des zweiten Reaktors 18. Damit die im ersten Reaktor 6 agglomerierten Partikel nicht mit einer unerwünschten Korngröße in den nachgeschalteten Reaktor 18 eintreten, ist an die Verbindungsleitung 19 ein weiterer Zerhacker bzw. eine weitere Mühle 20 angeschlossen, der bzw. die die Partikel vor dem Eindüsen in den Reaktor 18 feinst zerkleinert. Nach dem Austritt aus dem nachgeschalteten Reaktor 18 gelangen die mit Staub und Schwefeldioxyd behafteten Partikel über eine Leitung 21 in das Abscheidefilter 3.

Die gesättigten, d.h. nicht wiederverwendbaren Altkalkpartikel werden von einem unterhalb des Filters 3 angeordneten Schneckenförderer 22 in ein Sammelsilo 23 für das Altkalkgemisch transportiert, aus dem es sich chargenweise entnehmen und zum Herstellen von Kalksandsteinen bzw. als Verputzmaterial verwenden läßt. Die gereinigten Gase gelangen nach dem Verlassen des Filters 3 über eine Leitung 24 zu einem Kamin 25.

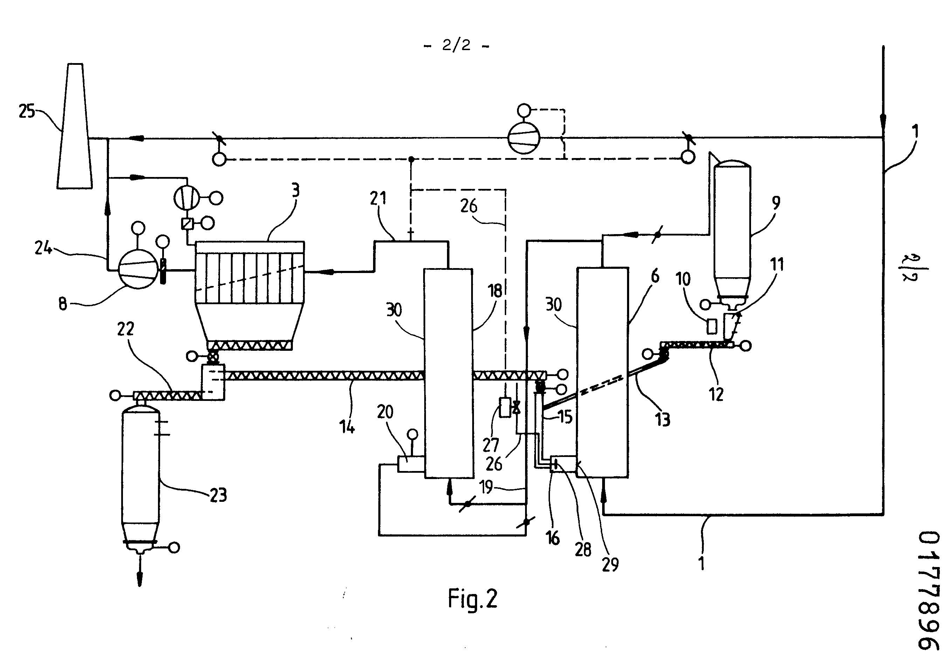

Die in Fig. 2 dargestellte Anlage weicht gegenüber der vorbeschriebenen Anlage in zwei verfahrenswesentlichen Maßnahmen ab; der Mühle bzw. dem Zerhacker 16 ist nämlich erstens noch eine Wasserleitung 26 mit einem Regler 27 zugeordnet. Die Wasserleitung 26 tritt eingangsseitig neben dem Saugrohr 15 zum Zuführen des Altkalkes und der damit verbundenen Leitung 13 zum Zuführen des Frischkalks mittig in die Mühle 16 ein. In der Mühle 16 ist mit geringem Abstand vom Austrittsende der Wasserleitung 26 eine Scheibe 28 angeordnet, die das über die Leitung 26 mittels des Reglers 27 periodisch zugeführte Wasser beim Aufprallen zerstäubt und in der Mühle verteilt. Das Wasser vermischt sich innig mit dem beispielsweise von einer nicht dargestellten rotierenden Welle des Zerhackers mittels Schlegelmessern oder von Mahlsteinen der Mühle feinstzerkleinerten Kalk. Die Mühle 16 drückt das feinstzerkleinerte, angefeuchtete Kalkgemisch in den Reaktor 6, wo es auf die einströmenden heißen Rauchgase trifft. Die Rauchgase werden dabei auf ihrem Weg von unten nach oben einerseits von dem feuchten Kalkgemisch gekühlt, und andererseits werden gleichzeitig die Schadstoffe neutralisiert. Der Mühle 20 des nachgeschalteten Reaktors 18 ist nicht noch einmal eine Wasserleitung zugeordnet, da sich der erforderliche Befeuchtungsgrad des um- bzw. rücklaufenden Kalks durch das periodische Zuführen von Wasser in der Mühle 16 aufrechterhalten läßt. Es liegt jedoch im Rahmen der Erfindung, auch den zweiten Zerhacker

- 12 -

oder die zweite Mühle 20 mit einer Wasserzuführung auszurüsten.

Zwar kann keine unbegrenzte Menge Wasser beigemischt werden; es hat sich jedoch gezeigt, daß die Wasserbeimischung bei Rauchgastemperaturen, die ca 140$^{\circ}$ bis 160$^{\circ}$C nicht übersteigen, ausreichend ist, um die Anlage dann ohne Vorkühlung der Gase, d.h. ohne Gaskühler betreiben zu können.

Die andere wesentliche Maßnahme besteht darin, daß zumindest der Zerhacker oder die Mühle 16 des vom Rauchgas zuerst durchströmten Reaktors 6 unmittelbar am Reaktor angeordnet ist, und zwar so, daß die Mühle 16 mit ihrer Austritts- bzw. Druckseite 29 eine Wand 30 des Reaktors 6, 18 durchdringt und damit im Inneren des Reaktors mündet. Die Mühle 16 drückt bzw. schleudert das feinstzerkleinerte Adsorbens dann gleichmäßig verteilt in den Reaktor, so daß es sich homogen mit dem Gasstrom vermischt.

2 kf

Dr.-Ing. Reimar König : Dipl.-Ing. Klaus Bergen

Wilhelm-Tell-Str. 14   4000 Düsseldorf 1   Telefon 39 70 26   Patentanwälte

- 13 -                    36 276 B

MikroPul Ducon Gesellschaft für Mahl- und Staubtechnik mbH
================================================================

Welserstraße 9-11, 5000 Köln 90
=================================

"Verfahren und Vorrichtung zum Neutralisieren und
Abscheiden von Schadstoffen in Rauch- bzw. Abgasen"

Patentansprüche:

1.  Verfahren zum Neutralisieren und Abscheiden saurer bzw. säurehaltiger, insbesondere Schwefel enthaltender Schadstoffe in bzw. aus Rauch-/Abgasen von Feuerungsanlagen, wobei den Gasen in einem Rauchgas-Reaktor (6; 18) bzw. Rauchgas-Kanal Frischkalk und/oder Altkalk zugeführt wird, dadurch gekennzeichnet, daß agglomerierte Kalkpartikel vor dem Eindüsen in den Rauchgas-Reaktor feinstzerkleinert werden.

2.  Verfahren nach Anspruch 1, dadurch gekennzeichnet, daß die sich beim Zusammenführen mit den Rauchgasen in einer ersten Stufe vermischenden und agglomerierenden Altkalk- und Frischkalkpartikel vor dem Eindüsen in einen zweiten Reaktor (18) feinstzerkleinert werden.

3.  Verfahren nach Anspruch 1 oder 2, dadurch gekennzeichnet, daß Neu- und Altkalk im Verhältnis 1:8 bis 1:12, insbesondere 1:10 gemischt werden.

4.  Verfahren nach einem oder mehreren der Ansprüche 1 bis 3, dadurch gekennzeichnet, daß die Kalkpartikel beim Feinstzerkleinern mit Wasser vermischt werden.

- 14 -

5. Verfahren nach einem oder mehreren der Ansprüche 1 bis 4, dadurch gekennzeichnet, daß die Menge des zugegebenen Wassers etwa 10 bis 15% der Gesamtmenge des umlaufenden Kalks beträgt.

6. Vorrichtung zum Durchführen des Verfahrens nach einem oder mehreren der Ansprüche 1 bis 5, dadurch gekennzeichnet, daß dem Rauchgas-Reaktor (6) in einem Zulauf (14) des Altkalks ein Zerhacker oder eine Mühle (16) zugeordnet ist.

7. Vorrichtung nach Anspruch 6, gekennzeichnet durch einen der Mühle (16) vorgeschalteten Schneckenförderer (14).

8. Vorrichtung nach Anspruch 6 oder 7, dadurch gekennzeichnet, daß eine Neukalk-Leitung (13) in ein an den Zulauf (14) für den Altkalk angeschlossenes Saugrohr (15) der Mühle (16) mündet.

9. Vorrichtung nach einem oder mehreren der Ansprüche 6 bis 8, dadurch gekennzeichnet, daß die Mühle (16) unmittelbar am Reaktor (6) angeordnet ist und mit ihrer Austrittsseite (29) im Reaktorinneren mündet.

10. Vorrichtung nach einem oder mehreren der Ansprüche 6 bis 9, dadurch gekennzeichnet, daß eine Wasserleitung (26) in die Mühle (16) führt.

11. Vorrichtung nach Anspruch 10, dadurch gekennzeichnet, daß die Wasserleitung (26) eingangsseitig neben einem Zuführrohr (13, 15) für den Frisch- und/oder Altkalk mittig in die Mühle (16) eintritt.

12. Vorrichtung nach Anspruch 10 oder 11, _gekennzeichnet_ _durch_ eine in der Mühle (16) knapp unterhalb der Wasserleitung (26) angeordnete Scheibe (28).

13. Vorrichtung nach einem oder mehreren der Ansprüche 10 bis 12, _gekennzeichnet durch_ einen an die Wasserleitung (26) angeschlossenen Regler (27).

14. Vorrichtung zum Durchführen des Verfahrens nach Anspruch 2, _gekennzeichnet durch_ einen dem Rauchgas-Reaktor (6) nachgeschalteten zweiten Rauchgas-Reaktor (18).

15. Vorrichtung nach einem oder mehreren der Ansprüche 6 bis 14, _gekennzeichnet durch_ einen an eine die beiden Reaktoren (6; 18) miteinander verbindende Rohrleitung (19) angeschlossenen zweiten Zerhacker oder eine Mühle (20).

16. Vorrichtung nach Anspruch 15, _dadurch gekennzeichnet,_ daß die Leitung (19) die Ausgangsseite des ersten Reaktors (6) mit der Eingangsseite des zweiten Reaktors (18) verbindet.

17. Vorrichtung nach einem oder mehreren der Ansprüche 6 bis 16, _gekennzeichnet durch_ einen dem/den Reaktor(en) (6; 18) vorgeschalteten Gaskühler (2) mit einem schräg verlaufenden Boden (5).

18. Vorrichtung nach einem oder mehreren der Ansprüche 6 bis 17, _dadurch gekennzeichnet,_ daß Wasser-/Luftdüsen (4) des Gaskühlers (2) entgegen der Strömungsrichtung des Gases angeordnet sind.

19. Vorrichtung nach einem oder mehreren der Ansprüche 6 bis 18, gekennzeichnet durch eine Venturi-Bauweise der Reaktoren (6; 18).

20. Verwendung des bei dem Verfahren nach einem oder mehreren der Ansprüche 1 bis 5 anfallenden Abfallproduktes als Preßmaterial zum Herstellen von Kalksandsteinen.

21. Verwendung des bei dem Verfahren nach einem oder mehreren der Ansprüche 1 bis 5 anfallenden Abfallproduktes als Material zum Verputzen.

2 kf

Fig.1

Fig.2

0177896